# EUROPÄISCHE PATENTSCHRIFT

(11) **EP 3 352 961 B1**
(45) Veröffentlichungstag und Bekanntmachung des Hinweises auf die Patenterteilung: **05.02.2020**
(21) Anmeldenummer: 16767315.1
(22) Anmeldetag: 21.09.2016
(51) Int. Cl.: B29B 17/04, B29C 48/10, B29C 48/00, B02C 18/14, B02C 23/26, B29B 17/00

(54) **VORRICHTUNG UND VERFAHREN ZUR VERARBEITUNG VON THERMOPLASTISCHEM KUNSTSTOFF MIT EINER BLASVORRICHTUNG FÜR EINE TRANSPORTSCHNECKE**
DEVICE AND METHOD FOR PROCESSING THERMOPLASTIC PLASTIC HAVING A BLOWING DEVICE FOR A CONVEYING SCREW
DISPOSITIF ET PROCÉDÉ POUR TRAITER DE LA MATIÈRE THERMOPLASTIQUE AU MOYEN D'UN DISPOSITIF DE SOUFFLAGE POUR UNE VIS TRANSPORTEUSE

(30) Priorität: 22.09.2015 AT 508082015
(43) Veröffentlichungstag der Anmeldung: 01.08.2018
(73) Patentinhaber: Next Generation Recyclingmaschinen GmbH, 4101 Feldkirchen an der Donau (AT)
(72) Erfinder: BRZEZOWSKY, Klaus, 4614 Marchtrenk (AT); GRUBER, Klemens, 4261 Rainbach (AT); PICHLER, Thomas, 4171 St. Peter am Wimberg (AT)
(74) Vertreter: Burger, Hannes
(86) Internationale Anmeldenummer: PCT/EP2016/072416
(87) Internationale Veröffentlichungsnummer: WO 2017/050822

(56) Entgegenhaltungen:
- WO-A1-01/47678
- WO-A1-2010/089174
- WO-A1-2011/014902

## Beschreibung

Die Erfindung betrifft eine Vorrichtung zur Verarbeitung von thermoplastischem Kunststoff, welche einen Vorratsbehälter zur Aufnahme von stückförmigen Kunststoffteilchen oder eine Transportleitung zum Transport von stückförmigen Kunststoffteilchen umfasst, eine mit dem Vorratsbehälter / der Transportleitung an einer Übergabeöffnung verbundene Transportschnecke sowie einen an die Transportschnecke anschließenden Extruder. Weiterhin weist die Vorrichtung zumindest einen gegenüber der Übergabeöffnung angeordneten (durch den Behälter / das Transportrohr hindurch weisenden) und auf die Übergabeöffnung gerichteten oder richtbaren Luftauslass auf. Zudem betrifft die Erfindung ein Verfahren zum Betrieb der obigen Vorrichtung
Eine Vorrichtung und ein Verfahren ähnlicher Art sind aus dem Stand der Technik grundsätzlich bekannt. Beispielsweise offenbart die EP 0 934 144 B1 dazu eine Vorrichtung zum Aufbereiten von thermoplastischem Kunststoffmaterial. Die Vorrichtung umfasst ein Maschinengehäuse mit einem Zuführungstrichter sowie einen angetriebenen Schieber, der das auf einer Bodenplatte befindliche und zu verarbeitende Kunststoffmaterial in eine Aufbereitertrommel beziehungsweise in ein Förderrohr drückt. Auf der Aufbereitertrommel sind Messer schraubenlinienförmig angebracht. Die Messer und die daran anschließende Förderschnecke fördern das zerkleinerte Kunststoffmaterial zu einer Schnecke eines Extruders, in den das Kunststoffmaterial abgegeben wird. Eine weitere Vorrichtung ist aus der WO 01/47678 A1 bekannt.

Nachteilig ist daran insbesondere die intermittierende Arbeitsweise des Schiebers, welche eine kontinuierliche Förderung des Kunststoffmaterials in die Aufbereitertrommel beziehungsweise in das Förderrohr wegen der Vor- und Rückbewegung des Schiebers unmöglich macht. Zudem kann der Schieber aufgrund des hydraulischen Antriebs und der dadurch erzeugbaren Druckkräfte das Kunststoffmaterial stark komprimieren und Verstopfungen hervorrufen, wenn es durch die Aufbereitertrommel nicht rasch genug abtransportiert wird.

In diesem Zusammenhang ist es grundsätzlich auch bekannt, dass die Vorrichtung zur Verarbeitung von thermoplastischem Kunststoff einen auf die Übergabeöffnung gerichteten Luftauslass aufweist, welcher gegenüber der Übergabeöffnung angeordnet ist (und durch den Behälter / das Transportrohr hindurch weist). Demgemäß ist es grundsätzlich auch bekannt, einen (den Behälter / das Transportrohr durchströmenden) Luftstrom auf die Übergabeöffnung auszurichten. Problematisch ist auch hier die Verstopfungsneigung, insbesondere wenn der Luftstrom relativ stark ist. Die aus dem Luftauslass austretende Luft verlässt die Vorrichtung zur Verarbeitung von thermoplastischem Kunststoff dann zwangsläufig über deren Vorratsbehälter oder das Transportrohr. Es kommt somit zu Verwirbelungen im Vorratsbehälter/Transportrohr und je nach Beschaffenheit des angelieferten und zu verarbeitenden Materials mitunter zu großer Staubentwicklung und Staubaustritt aus der Maschine.

Darüber hinaus offenbart die WO 2010/089174 A1 in diesem Zusammenhang eine Vorrichtung zur Zerkleinerung von thermoplastischem Kunststoffgut, welche einen Behälter zur Aufnahme des Kunststoffguts umfasst und eine in den Behälter ragende oder darin angeordnete Zerkleinerungseinrichtung zur Zerkleinerung und Förderung des Kunststoffguts zu einer Austragsöffnung. Die Vorrichtung umfasst weiterhin Lufteinlässe im Bereich der Zerkleinerungseinrichtung und Luftauslässe in der Behälterwand.

Eine Aufgabe der Erfindung ist es nun, eine verbesserte Vorrichtung und ein verbessertes Verfahren zur Verarbeitung von thermoplastischem Kunststoff anzugeben. Insbesondere soll eine kontinuierliche Förderung von Kunststoffteilchen in eine Aufbereitertrommel beziehungsweise in eine Transportschnecke möglich sein. Zudem sollen Verstopfungen im Bereich einer Übergabeöffnung zur Aufbereitertrommel beziehungsweise Transportschnecke nach Möglichkeit vermieden werden.

Die Aufgabe der Erfindung wird mit einer Vorrichtung der eingangs genannten Art gelöst, welche Mittel zur Erfassung einer Belastung eines Antriebs des Extruders aufweist, Mittel zur Beeinflussung eines aus dem zumindest einen Luftauslass austretenden Luftstroms sowie eine mit den Erfassungsmitteln und den Beeinflussungsmitteln verbundene Regelung.

Die Aufgabe der Erfindung wird weiterhin mit einem Verfahren für den Betrieb der obigen Vorrichtung gelöst, bei dem die Stärke/Richtung des Luftstroms in Abhängigkeit einer Belastung des Extruders eingestellt oder geregelt wird.

Durch die vorgeschlagenen Maßnahmen können die Kunststoffteilchen aus dem Behälter oder aus der Transportleitung in benötigter Menge in die Transportschnecke hineingeblasen werden. Das heißt, die Zuführung von Kunststoffteilchen in den Extruder kann anhand dessen Füllgrad eingestellt oder geregelt werden. Dadurch ist einerseits eine kontinuierliche Förderung der Kunststoffteilchen in die Aufbereitertrommel beziehungsweise Transportschnecke möglich, andererseits können auch Verstopfungen im Bereich der Übergabeöffnung vermieden werden, da das zugeführte Material durch den Luftstrom zwar aufgelockert, jedoch nicht aufgewirbelt wird. Damit ist auch eine Staubbelastung vergleichsweise gering. Besonders vorteilhaft sind auch die weitgehend stabilen Verhältnisse im beschickten Extruder, wodurch die Erzeugung des Kunststoffmaterials sehr gleichmäßig erfolgen kann. In aller Regel verlangen hohe Schüttgewichte des zugeführten Materials nach geringeren Luftgeschwindigkeiten als geringe Schüttgewichte.

Die Mittel zur Beeinflussung der Stärke des Luftstroms können beispielsweise durch ein Ventil oder einen Schieber gebildet sein, mit denen ein Querschnitt in der Zufuhr des Luftstroms und damit die Stärke des Luftstroms verändert wird. Die Mittel zur Beeinflussung der Stärke des Luftstroms können aber auch durch einen Kompressor/Verdichter gebildet sein, welcher Druckluft an den zumindest einen Luftauslass fördert und dessen Leistungsabgabe zur Beeinflussung der Stärke des Luftstroms verändert wird. Die Mittel zur Lenkung des Luftstroms können beispielsweise durch eine schwenkbare Düse gebildet sein, aber auch durch schwenkbare Klappen, die gleichzeitig auch den Querschnitt in der Zufuhr des Luftstroms verändern können.

Generell kann die Zufuhr der Kunststoffteilchen in die Transportschnecke im Wesentlichen auf dem Luftstrom basieren oder überhaupt ausschließlich mit Hilfe des Luftstroms erfolgen. Der Begriff "im Wesentlichen" bedeutet im gegebenen Zusammenhang im Speziellen, dass der Materialtransport zu wenigstens 70% auf dem Effekt des Luftstroms basiert. Insbesondere kann die Zufuhr der Kunststoffteilchen in die Transportschnecke weiterhin ohne Schieber erfolgen. Das heißt, die vorgestellte Vorrichtung weist in diesem Fall keinen gegenüber der Transportschnecke angeordneten und auf diesen ausgerichteten Schieber auf.

Weitere vorteilhafte Ausgestaltungen und Weiterbildungen der Erfindung ergeben sich aus den Unteransprüchen sowie aus der Beschreibung in Zusammenschau mit den Figuren.

In einer besonders vorteilhaften Ausführungsvariante wird der Luftstrom verstärkt und/oder stärker auf die Übergabeöffnung ausgerichtet, wenn die Belastung des Extruders sinkt und umgekehrt. Demgemäß ist es von Vorteil, wenn die Regelung dazu eingerichtet ist, den Luftstrom zu verstärken, wenn eine Belastung des Extruders sinkt und umgekehrt. Dadurch wird dem Extruder mehr Material zugeführt, wenn dessen Füllgrad sinkt und umgekehrt.

Günstig ist es in obigem Zusammenhang, wenn für die Ermittlung der Belastung des Extruders eine Drehzahl eines Antriebs des Extruders, ein von diesem Antrieb aufgenommener Strom oder die Torsion einer Welle im Antrieb gemessen wird. Zu diesem Zweck kann ein Sensor zur Messung einer Drehzahl des Antriebs des Extruders (z.B. ein digitaler Inkrementalgeber) vorgesehen sein, ein Sensor zur Messung eines vom Antrieb aufgenommenen Stroms (z.B. ein Spannungsmesser an einem Strommesswiderstand) oder beispielsweise auch ein Sensor zur Messung der Torsion einer Welle im Antrieb (z.B. eine Messbrücke mit Dehnmeßstreifen). Generell kann der Antrieb auch ein Getriebe aufweisen. Die oben genannte Drehzahl und die oben genannte Torsion kann daher auch an einem Bauteil im Getriebe abgenommen werden. Generell wird der Extruder dann stärker belastet, wenn die Drehzahl des Antriebs sinkt, der vom Antrieb aufgenommene Strom steigt oder die Torsion einer Welle im Antrieb steigt.

Günstig ist es, wenn die Mittel zur Beeinflussung eines aus dem zumindest einen Luftauslass austretenden Luftstroms durch ein Ventil, einen Schieber oder eine Klappe gebildet ist. Mit einem Ventil/Schieber kann gut die Stärke des Luftstroms (das heißt dessen Geschwindigkeit und dessen Volumenstrom) eingestellt werden. Mit einer Klappe kann gut die Richtung und bedingt auch die Stärke des Luftstroms eingestellt werden.

Besonders vorteilhaft ist es, wenn die Mittel zur Beeinflussung eines aus dem zumindest einen Luftauslass austretenden Luftstroms proportional einstellbar sind. Demgemäß ist es von besonderem Vorteil, wenn die Stärke/Richtung des Luftstroms proportional eingestellt wird. Der besondere Vorteil einer proportionalen Einstellung der Stärke und/oder Richtung des Luftstroms liegt darin, dass Verwirbelungen im Vorratsbehälter/Transportrohr und eine damit verbundene Staubentwicklung vergleichsweise gering gehalten werden können. Dies liegt daran, dass die Stärke/Richtung des Luftstroms sehr gut an den Bedarf angepasst werden kann, beziehungsweise im Idealfall überhaupt (gerade) dem Bedarf entspricht. Damit sind auch die Verhältnisse im beschickten Extruder weitgehend stabil, wodurch die Erzeugung des Kunststoffmaterials sehr gleichmäßig erfolgt. Ein weiterer Vorteil ist, dass der von einem proportionalen Stellmittel emittierte konstante Schall als angenehmer empfunden wird als zum Beispiel intermittierender Schall. Zudem weist ein proportionales Stellmittel wegen der schonenden Betätigung auch eine vergleichsweise lange Lebensdauer auf.

Ein weiterer Vorteil des proportionalen Beeinflussungsmittels für die Stärke des Luftstroms (z.B. Ventil oder Schieber) besteht darin, dass es nicht so leicht verstopfen kann. Ein proportionales Stellmittel ermöglicht grundsätzlich einen konstanten Volumenstrom beliebiger Stärke. Durch den kontinuierlichen Luftaustritt ist ein Verstopfen des Luftaustritts eher unwahrscheinlich. Zudem kann eine Austrittsöffnung in diesem Fall relativ groß gewählt werden können, ohne dass damit ein sehr hoher und an sich unerwünschter Luftverbrauch einhergeht. Dadurch kann einem Verstopfen der Düsen ebenfalls entgegengewirkt werden. Ohne Einsatz eines proportionalen Stellmittels muss eine Luftaustrittsöffnung bei gegebenem Systemdruck und einem kleinen gewünschten Volumenstrom zwangsläufig vergleichsweise klein gestaltet werden und neigt dementsprechend leicht zur Verstopfung. Das Gesagte bezieht sich insbesondere, aber nicht nur, auf Proportionalventile, Proportionalschieber und Proportionalklappen.

Vorteilhaft ist es weiterhin, wenn die Mittel zur Beeinflussung eines aus dem zumindest einen Luftauslass austretenden Luftstroms zwei diskrete Stellungen aufweisen und die Regelung dazu eingerichtet ist, die genannten Mittel mit variablem Puls-Pausen-Verhältnis anzusteuern. Demgemäß ist es von Vorteil, wenn die Stärke/Richtung des Luftstroms durch ein Umschalten zwischen zwei diskreten Werten in einem variablen Puls-Pausen-Verhältnis quasi-proportional eingestellt wird. Obwohl die genannten Beeinflussungsmittel nur zwei Stellungen aufweisen, kann durch die Taktung und das veränderliche Puls-Pausen-Verhältnis ein quasi-proportionales Verhalten erzielt werden. Das heißt, dass die Stärke/Richtung des Luftstroms im Mittel einem gewünschten Wert entspricht. Das Gesagte bezieht sich insbesondere, aber nicht nur, auf Ventile, Schieber und Klappen, die lediglich zwei Stellungen aufweisen insbesondere eine "EIN"-Stellung und eine "AUS"-Stellung. Vorteilhaft sind solche Beeinflussungsmittel wegen ihres einfachen Aufbaus vergleichsweise robust.

Besonders vorteilhaft ist es weiterhin, wenn die Transportschnecke in horizontaler Richtung ausgerichtet ist, oder deren Ausrichtung wenigstens eine horizontale Komponente aufweist.

Ist die Transportschnecke schräg ausgerichtet und weist demzufolge eine horizontale (und vertikale) Komponente auf, so kann die Förderung der Kunststoffteilchen begünstigt werden, wenn die Transportschnecke nach unten geneigt ist. Wird sie dagegen nach oben geneigt, so wird der Einfluss des Luftstroms stärker und eine eventuell vorhandene Regelung direkter.

Besonders vorteilhaft ist es darüber hinaus, wenn ein Querschnitt der Übergabeöffnung in vertikaler Richtung ausgerichtet ist, oder deren Ausrichtung wenigstens eine vertikale Komponente aufweist. Ist der Querschnitt schräg ausgerichtet und weist demzufolge eine vertikale (und horizontale) Komponente auf, so kann die Förderung der Kunststoffteilchen begünstigt werden, wenn der Querschnitt nach oben hin offen ist. Wird der Querschnitt dagegen so geneigt, dass die Übergabeöffnung etwas nach unten zeigt, so wird der Einfluss des Luftstroms stärker und eine eventuell vorhandene Regelung direkter.

In einer weiteren vorteilhaften Ausführungsvariante weist die die Transportschnecke darauf angeordnete Zerkleinerungsmittel auf, welche im Speziellen durch Zähne und/oder durch durchgehende Schneiden und/oder durch Messer gebildet sind. Auf diese Weise kann das in die Transportschnecke geförderte Material weiter zerkleinert werden, bevor es den Extruder erreicht. Somit kann dem Extruder Material von optimaler Größe zugeführt werden, wodurch eine ordnungsgemäße Durchmischung und ein ordnungsgemäßes Aufschmelzen des Materials gewährleistet und ein Verstopfen des Extruders vermieden werden können. Die Transportschnecke kann somit auch (teilweise) als Aufbereitertrommel/Zerkleinerungs-schnecke aufgefasst werden beziehungsweise diese Funktion beinhalten.

Die Transportschnecke kann durchgehend mit Schneiden und/oder Zähnen und/oder Messern besetzt sein, oder diese nur in einem (durchgehenden) Teilbereich (d.h. in einem Zerkleinerungsbereich) aufweisen, welcher an einen Anfangsbereich und/oder Endbereich angrenzt, in dem/denen keine Schneiden, Zähne oder Messer angeordnet sind. Auf der Transportschnecke können durchgehendende Schneiden, Zähne und Messer jeweils alleine eingesetzt werden oder in beliebiger Kombination.

"Durchgehende Schneiden" erstrecken sich im Wesentlichen über die gesamte Länge der Transportschnecke respektive über die gesamte Länge eines Zerkleinerungsbereichs. Insbesondere können die durchgehenden Schneiden spiralförmig oder axial verlaufen. Über den Umfang der Transportschnecke können mehrere durchgehende Schneiden verteilt sein, oder die Transportschnecke weist nur eine durchgehende Schneide auf. Bei der Drehung der Transportschnecke werden die durchgehenden Schneiden im Wesentlichen quer zu deren Längserstreckung bewegt, respektive bewirkt die Drehung der Transportschnecke eine Bewegung mit einer solchen Querkomponente. Die Trennung der Kunststoffteilchen erfolgt daher hauptsächlich durch Scheren.

"Zähne" können als unterbrochene Schneiden oder Schneiden mit Lücken aufgefasst werden. Auch deren Schneiden können spiralförmig oder axial verlaufen und auch deren Schneiden werden bei der Drehung der Transportschnecke quer zu deren Längserstreckung bewegt. Die Trennung der Kunststoffteilchen erfolgt daher hauptsächlich durch Scheren und Reißen.

"Messer" weisen keine ausgeprägte axiale Erstreckung auf, und deren Schneiden erstrecken sich im Wesentlichen radial nach außen. Bei der Drehung der Transportschnecke werden die Schneiden wiederum quer zu deren Längserstreckung bewegt, die Ebene des "Messerrückens" steht dabei jedoch im Wesentlichen normal auf die Drehachse der Transportschnecke. Die Trennung der Kunststoffteilchen erfolgt hauptsächlich durch Schneiden.

Generell ist eine exakte Unterteilung der Trennverfahren kaum möglich, insbesondere wenn die Schneiden nicht genau axial oder nicht genau radial ausgerichtet sind. In der Regel werden die Kunststoffteilchen daher durch Scheren und Reißen und Schneiden zerkleinert.

Günstig ist es auch, wenn im Bereich der Transportschnecke mit deren durchgehenden Schneiden/Messern/Zähnen (insbesondere in deren Zerkleinerungsbereich) zusammenwirkende, feststehende Gegenschneiden/Gegenmesser/Gegenzähne angeordnet sind. Dadurch wird die Schnittleistung der Transportschnecke verbessert. Insbesondere bei Vorsehen von Messern und Gegenmessern erfolgt die Trennung der Kunststoffteilchen nicht mehr notwendigerweise vorwiegend durch Schneiden, sondern gegebenenfalls auch durch Scherung.

Vorteilhaft ist es darüber hinaus, wenn die Zerkleinerungsmittel im Bodenbereich des Vorratsbehälters (und vor der Übergabeöffnung) angeordnet sind. Dadurch können die Kunststoffteilchen schon zerkleinert werden, bevor sie in die Transportschnecke gelangen.

Vorteilhaft ist es schließlich auch, wenn mehrere Luftauslässe im Bereich der Transportschnecke und/oder der Zerkleinerungsmittel entlang einer Schraubenlinie angeordnet und/oder in Richtung einer Schraubenlinie ausgerichtet sind. Mit letzteren kann ein im Wesentlichen schraubenlinienförmiger Luftstrom erzeugt werden. Auf diese Weise werden die Kunststoffteilchen besonders gut in die Transportschnecke eingeblasen oder mit dem Luftstrom entlang dieser befördert.

An dieser Stelle wird angemerkt, dass die Zerkleinerungsmittel nicht notgedrungen auf der Transportschnecke angeordnet sein müssen, sondern grundsätzlich auch eine von der Transportschnecke getrennte und gesondert antreibbare Zerkleinerungsvorrichtung vorgesehen sein kann. Das bisher Gesagte gilt dabei sinngemäß. Beispielsweise kann die Zerkleinerungsvorrichtung als Welle mit Messern ausgebildet sein.

Weiterhin wird angemerkt, dass sich die zu der Vorrichtung zur Verarbeitung von thermoplastischem Kunststoff offenbarten Varianten und daraus resultierenden Vorteile sinngemäß auch auf die Ausführungsformen des erfindungsgemäßen Betriebsverfahrens beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: eine erste beispielhafte und schematisch dargestellte Vorrichtung zur Verarbeitung von thermoplastischem Kunststoff mit einem als Düse ausgebildeten Luftauslass;
- Fig. 2: eine zweite beispielhafte Vorrichtung mit schwenkbaren Klappen zu Richtungsbeeinflussung des aus dem Luftauslass austretenden Luftstroms;
- Fig. 3: eine weitere beispielhafte Vorrichtung mit einer erweiterten Regelung;
- Fig. 4: eine beispielhafte Vorrichtung zur Verarbeitung von thermoplastischem Kunststoff mit schräg ausgerichteter Transportschnecke und Übergabeöffnung;
- Fig. 5: wie Fig. 1, nur mit Zähnen und Messern auf der Transportschnecke;
- Fig. 6: wie Fig. 1, nur mit durchgehenden Schneiden auf der Transportschnecke;
- Fig. 7: wie Fig. 1, nur mit einer Zerkleinerungseinrichtung im Bodenbereich des Vorratsbehälters und mehreren schräg ausgerichteten Düsen;
- Fig. 8: wie Fig. 7, nur mit einer von der Transportschnecke geteilten und gesondert angetriebenen Zerkleinerungseinrichtung und
- Fig. 9: eine Vorrichtung, bei der die Zerkleinerungseinrichtung oberhalb der Transportschnecke und Luftauslässe im Bereich der Transportschnecke angeordnet sind.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

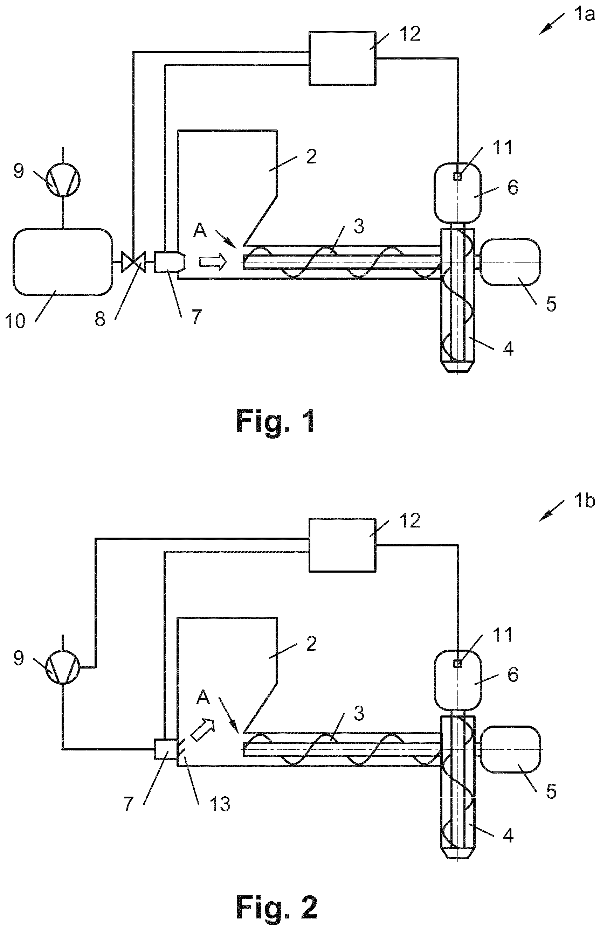

Fig. 1 zeigt eine Vorrichtung 1a zur Verarbeitung von thermoplastischem Kunststoff, welche einen Vorratsbehälter 2 zur Aufnahme von stückförmigen Kunststoffteilchen umfasst, sowie eine mit dem Vorratsbehälter 2 an einer Übergabeöffnung A verbundene Transportschnecke 3 und einen an die Transportschnecke 3 anschließenden Extruder 4. Die Transportschnecke 3 wird von einem ersten Antriebsmotor 5 und der Extruder 4 von einem zweiten Antriebsmotor 6 angetrieben. Die Transportschnecke 3 und der Extruder 4 kreuzen einander in dem gezeigten Beispiel. Es wird jedoch darauf hingewiesen, dass es sich bei der Fig. 1 um eine rein schematische Darstellung handelt und die Transportschnecke 3 und der Extruder 4 auch anders zueinander angeordnet sein können, insbesondere koaxial. Denkbar ist auch, dass die Transportschnecke 3 und der Extruder 4 von einem einzigen Motor angetrieben werden.

Neben den bereits genannten Bauteilen weist die Vorrichtung 1a einen gegenüber der Übergabeöffnung A angeordneten und auf diese gerichteten Luftauslass 7 (hier eine Düse) auf. Dadurch bildet sich ein auf die Übergabeöffnung A gerichteter Luftstrom aus (siehe den Pfeil in der Fig. 1). Auf diese Weise können die Kunststoffteilchen in die Transportschnecke 3 hineingeblasen werden, wodurch Verstopfungen im Bereich der Übergabeöffnung A grundsätzlich vermieden werden können.

Die Stärke des Luftstroms ist, wie in der Fig. 1 dargestellt, einstellbar. Zu diesem Zweck weist die Vorrichtung 1a ein Ventil 8 auf, das mit einem von einem Verdichter 9 gespeisten Drucklufttank 10 verbunden ist und das Mittel zur Beeinflussung des aus dem Luftauslass 7 austretenden Luftstroms bildet. Dadurch kann die in die Transportschnecke 3 geblasene Menge an Kunststoffteilchen beeinflusst werden.

In dem in Fig. 1 dargestellten Beispiel wird die die Stärke des Luftstroms darüber hinaus in Abhängigkeit einer Belastung des Extruders 4 eingestellt oder geregelt. Zu diesem Zweck weist die Vorrichtung 1a Mittel 11 zur Erfassung einer Belastung des Antriebs 6 des Extruders 4 auf, sowie eine mit den Erfassungsmitteln 11 und dem Ventil 8 verbundene Regelung 12. Die Regelung 12 ist dazu eingerichtet, den Luftstrom zu verstärken, wenn eine Belastung des Extruders 4 sinkt und umgekehrt. Das heißt das Ventil 8 wird weiter geöffnet, wenn die Belastung des Extruders 4 sinkt und weiter geschlossen, wenn die Belastung des Extruders 4 steigt.

Zur Ermittlung der Belastung des Extruders 4 können die Erfassungsmittel 11 als Sensor zur Messung einer Drehzahl des Antriebs 6 des Extruders 4 (z.B. als digitaler Inkrementalgeber), als Sensor zur Messung eines von diesem Antrieb 6 aufgenommener Stroms (z.B. als Spannungsmesser an einem Strommesswiderstand) oder als Sensor zur Messung der Torsion einer Welle im Antrieb 6 ausgebildet sein (z.B. als Messbrücke mit Dehnmeßstreifen). Sinkt die Drehzahl des Antriebs 6, steigt der vom Antrieb 6 aufgenommene Strom oder steigt die Torsion einer Welle im Antrieb 6, so ist dies ein Zeichen für eine stärkere Belastung des Extruders 4.

An dieser Stelle wird darauf hingewiesen, dass es sich beim Antrieb 6 nicht notgedrungen um einen Motor alleine handelt, sondern der Antrieb 6 beispielsweise auch ein Getriebe aufweisen kann. Die oben genannte Drehzahl und die oben genannte Torsion kann daher auch an einem Bauteil im Getriebe abgenommen werden.

Fig. 2 zeigt eine Vorrichtung 1b, welche der in der Fig. 1 gezeigten Vorrichtung 1a sehr ähnlich ist. Im Unterschied dazu ist aber anstelle der Düse 7 ein Luftauslass mit beweglichen Klappen 13 vorgesehen. Darüber hinaus ist auch kein Ventil 8 und auch kein Drucklufttank 10 vorgesehen.

Mit Hilfe der Klappen 13 ist der Luftstrom von der Übergabeöffnung A weglenkbar. Dadurch kann ebenfalls die in die Transportschnecke 3 geförderte Menge an Kunststoffteilchen beeinflusst werden. In der in der Fig. 2 gezeigten Stellung der Klappen 13 ist diese relativ gering, werden die Klappen 13 jedoch in horizontale Richtung verschwenkt, so steigt die in die Transportschnecke 3 geförderte Menge an Kunststoffteilchen.

Insbesondere wird die Richtung des Luftstroms in Abhängigkeit einer Belastung des Extruders 4 eingestellt oder geregelt. Dabei wird der Luftstrom im Speziellen stärker auf die Übergabeöffnung A ausgerichtet (das heißt im konkreten Beispiel mehr in horizontale Richtung gelenkt), wenn die Belastung des Extruders 4 sinkt und umgekehrt. Das bereits im Zusammenhang mit der Vorrichtung 1a zu der Regelung 12 und zu den Erfassungsmitteln 11 Gesagte gilt sinngemäß auch für die Vorrichtung 1b. Die Mittel zur Beeinflussung des aus dem Luftauslass 7 austretenden Luftstroms werden nun aber durch die Klappen 13 gebildet. An dieser Stelle wird angemerkt, dass die Klappen 13 nicht nur die Richtung des Luftstroms bestimmen, sondern auch dessen Stärke, insbesondere wenn die Klappen 13 nahe einer Schließstellung sind.

In dem in Fig. 2 gezeigten Beispiel ist auch der Verdichter 9 an die Regelung 12 angeschlossen, sodass auch dieser für die Beeinflussung der Stärke des Luftstroms herangezogen werden kann, insbesondere in Abhängigkeit einer Belastung des Extruders 4. Das in diesem Zusammenhang zum Ventil 8 Gesagte gilt sinngemäß auch für den Verdichter 9. Für eine Verringerung der Stärke des Luftstroms wird die Leistungszufuhr an den Verdichter 9 verringert und umgekehrt. Dies ist zwar vorteilhaft aber nicht zwingend, sondern der Verdichter 9 kann prinzipiell auch mit konstanter Leistung betrieben werden.

Selbstverständlich wäre der Einsatz eines Ventils 8 und eines Drucktanks 10 auch im Zusammenhang mit den Klappen 13 denkbar. Eine Stärke des Luftstroms kann dann wiederum (auch) durch das Ventil 8 beeinflusst werden. Insbesondere kann der Verdichter 9 dann mit konstanter Leistung laufen, beziehungsweise wird in an sich bekannter Weise anhand des im Drucktank 10 herrschenden Drucks gesteuert/geregelt.

Anstelle von Klappen 13 kann beispielsweise auch eine schwenkbare Düse eingesetzt werden, und anstelle eines Ventils 8 kann beispielsweise auch ein Schieber zur Beeinflussung des Querschnitts in der Zufuhr des Luftstroms eingesetzt werden.

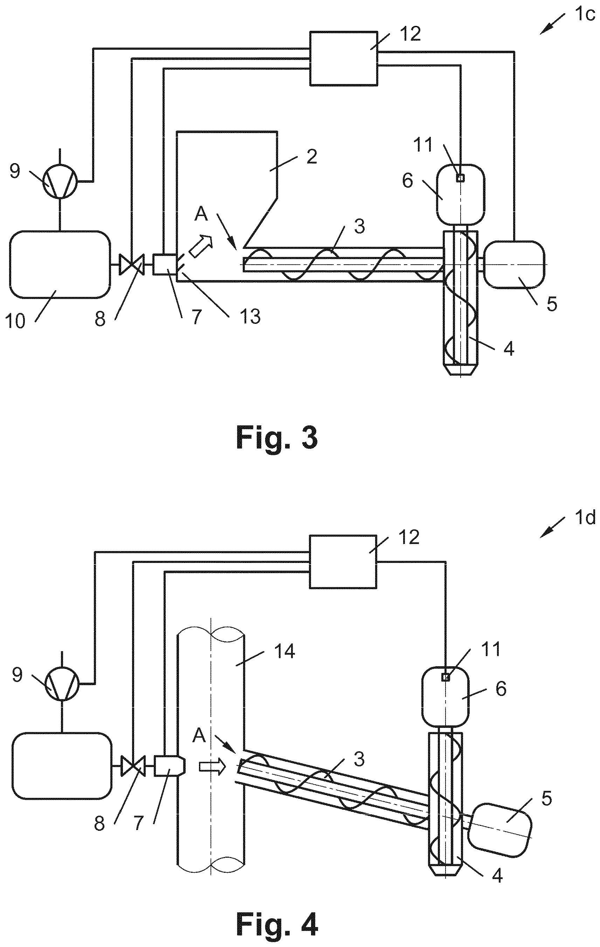

Fig. 3 zeigt nun ein weiteres Beispiel einer Vorrichtung 1c, welche den in den Figuren 1 und 2 dargestellten Vorrichtungen 1a und 1b sehr ähnlich ist. Bei der Vorrichtung 1c ist insbesondere auch der Antriebsmotor 5 der Transportschnecke 3 an die Regelung 12 angeschlossen und wird in die Steuerung/Regelung der Vorrichtung 1c eingebunden. Beispielsweise kann die Drehzahl der Transportschnecke 3 gesenkt werden, wenn Belastung des Extruders 4 steigt und umgekehrt, insbesondere synchron zur Beeinflussung des Luftstroms. Die Beeinflussung des Ventils 8, des Verdichters 9 sowie der Klappen 13 kann dabei in der bereits beschriebenen Weise erfolgen.

In den bisher gezeigten Beispielen ist die Transportschnecke 3 in horizontaler Richtung und die Übergabeöffnung A in vertikaler Richtung ausgerichtet. Dies ist zwar vorteilhaft, jedoch nicht zwingend. Die Fig. 4 zeigt ein dazu alternatives Beispiel für eine Vorrichtung 1d, welche ähnlich wie die Vorrichtung 1a der Fig. 1 ausgebildet ist, bei der die Transportschnecke 3 und der Querschnitt der Übergabeöffnung A jedoch schräg ausgerichtet sind. Die Ausrichtung der Transportschnecke 3 weist demzufolge eine horizontale (und eine vertikale) Komponente auf, und die Ausrichtung der Übergabeöffnung A weist eine vertikale (und eine horizontale) Komponente auf. In der Fig. 4 ist die Transportschnecke 3 nach unten geneigt, und die Übergabeöffnung A ist nach oben hin offen. Dadurch wird die Einbringung der Kunststoffteilchen in die Transportschnecke 3 begünstigt. Denkbar ist aber auch, dass die Transportschnecke 3 nach oben geneigt und die Übergabeöffnung A ist nach unten hin offen ist, wodurch vermieden wird, dass unbeabsichtigt Kunststoffteilchen in die Transportschnecke 3 fallen. Die Regelung über den Luftstrom wird damit direkter.

Denkbar ist auch, dass nur die Übergabeöffnung A geneigt wird (nach oben oder unten), die Transportschnecke 3 jedoch horizontal ausgerichtet ist. Oder die Transportschnecke 3 wird geneigt und die Übergabeöffnung A bleibt vertikal ausgerichtet. Denkbar ist auch, dass die Transportschnecke 3 und die Übergabeöffnung A gegensinnig geneigt sind. Das heißt die Transportschnecke 3 kann schräg nach unten ausgerichtet sein und auch die Übergabeöffnung A kann nach unten hin offen sein. Auch der gegenteilige Fall, bei dem die Transportschnecke 3 schräg nach oben ausgerichtet ist und die Übergabeöffnung A nach oben hin offen ist, ist vorstellbar.

Aus der Fig. 4 ist insbesondere auch ersichtlich, dass die Vorrichtung 1d nicht notgedrungen einen Behälter 2 aufweist, sondern die Transportschnecke 3 wie dargestellt an ein Transportrohr 14 angeschlossen ist. Über das Transportrohr 14 werden Kunststoffteilchen nicht nur zur Transportschnecke 3 befördert, sondern auch zu anderen (nicht dargestellten) Einheiten. Insbesondere erfolgt die Transportrichtung von oben nach unten. Durch den Luftstrom und auch die Neigung der Übergabeöffnung A in Richtung der Transportrichtung im Transportrohr 14 kann etwas von dem im Transportrohr 14 transportiertem Material abgezweigt und in die Transportschnecke 3 befördert werden.

Generell ist es auch von Vorteil, wenn die Transportschnecke 3 radial angeordnete Schneiden, Zähne und/oder Messer aufweist. Auf diese Weise kann das in die Transportschnecke 3 geförderte Material weiter zerkleinert werden, bevor es den Extruder 4 erreicht. Die Transportschnecke 3 kann somit auch (teilweise) als Aufbereitertrommel/Zerkleinerungsschnecke aufgefasst werden beziehungsweise diese Funktion beinhalten.

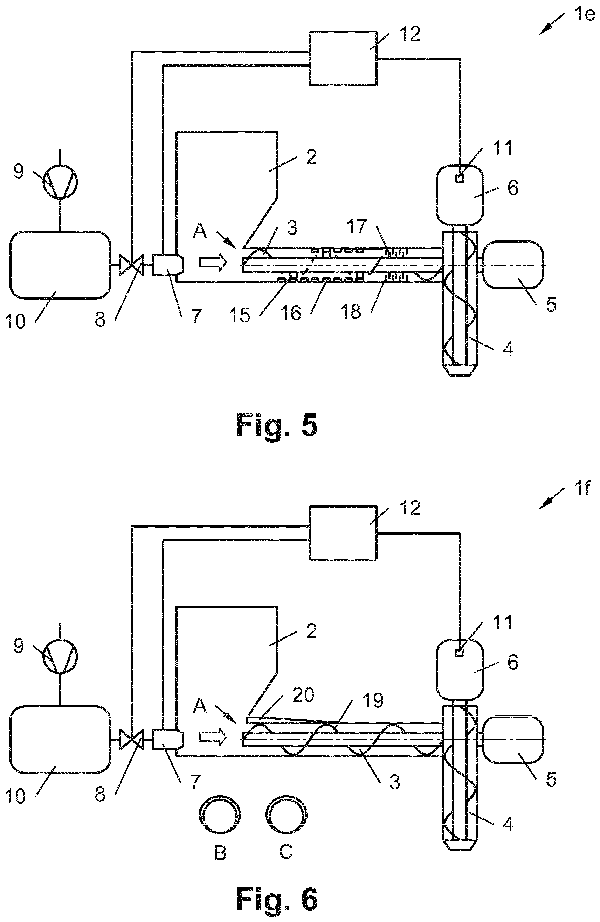

Die Fig. 5 zeigt anhand einer Vorrichtung 1e, welche im Wesentlichen der in Fig. 1 dargestellten Vorrichtung 1a entspricht, wie eine solche Transportschnecke 3 ausgebildet sein kann. Konkret umfasst die Transportschnecke 3 der Vorrichtung 1e Zähne 15 und Gegenzähne 16 sowie Messer 17 und Gegenmesser 18, wobei die Zähne 15 und Gegenzähne 16 eher im vorderen Bereich der Transportschnecke 3 und die Messer 17 und Gegenmesser 18 im Endbereich der Transportschnecke 3 angeordnet sind. Auf diese Weise wird das in die Transportschnecke 3 geförderte Material weiter zerkleinert, bevor es den Extruder 4 erreicht. Somit kann dem Extruder 4 Material von optimaler Größe zugeführt werden, wodurch eine ordnungsgemäße Durchmischung und ein Aufschmelzen des Materials gewährleistet und ein Verstopfen des Extruders 4 verhindert werden kann.

Fig. 6 zeigt schließlich ein Beispiel einer Vorrichtung 1f, welcher der in Fig. 5 dargestellten Vorrichtung 1e sehr ähnlich ist. Bei dieser Variante weist die Transportschnecke 3 jedoch keine Zähne 15 und keine Messer 17 auf, sondern durchgehende Schneiden 19. Diese Schneiden 19 wirken mit feststehenden Schneiden 20 zusammen, wodurch das zugeführte Material ebenfalls zerkleinert wird.

Die feststehenden Schneiden 20 können beispielsweise als axial ausgerichtete Schneiden ausgebildet sein (siehe auch die Frontansicht B) oder aber auch ebenfalls spiralförmig verlaufen (siehe die Frontansicht C). Besonders vorteilhaft ist es, wenn die Steigung der feststehenden spiralförmigen Schneiden 20 eine andere ist als die der Schneiden 19 der Transportschnecke 3, da dann Belastungsspitzen im Antriebsdrehmoment vermieden werden. Die spiralförmigen Scheiden 20 können im gleichen Richtungssinn gewunden sein wie die Schneiden 19 der Transportschnecke 3 oder auch gegenläufig dazu. Schließlich wäre auch vorstellbar, dass die feststehenden Schneiden 20 normal zur Achse der Transportschnecke 3 stehen.

Generell ist es von Vorteil, wenn die feststehenden Schneiden 20 nur im oberen und im seitlichen Bereich der Transportschnecke 3 angeordnet sind, da auf diese Weise vermieden wird, dass sich Material im unteren Bereich der Transportschnecke 3 ansammelt, das nicht abtransportiert wird. Zudem läuft das Rohr, in dem die Transportschnecke 3 läuft, trichterförmig zusammen, wodurch der Einzug der Kunststoffteilchen in die Transportschnecke 3 begünstigt wird. Selbstverständlich eignet sich die genannte exzentrische Konfiguration und/oder die genannte trichterförmige Struktur auch für die in der Fig. 5 dargestellten Zähne 15 und Messer 17. Umgekehrt ist auch für die Schneiden 20 der Fig. 6 eine zu der Transportschnecke 3 koaxiale und/oder zylindrische Anordnung möglich. Denkbar ist schließlich auch, dass die Transportschnecke 3 Schneiden 19, Messer 17 und Zähne 15 aufweist beziehungsweise eine beliebige Kombination davon.

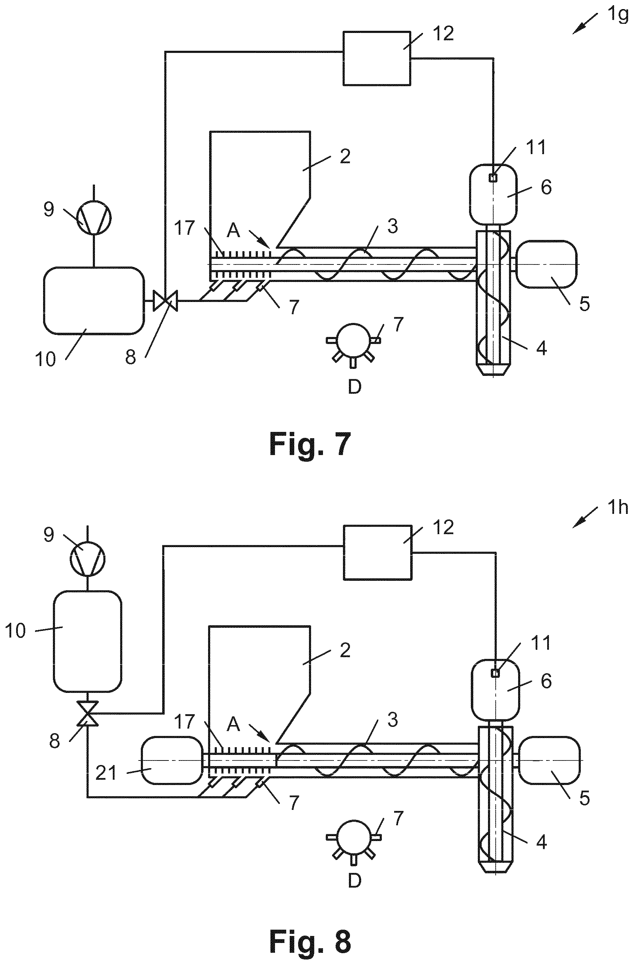

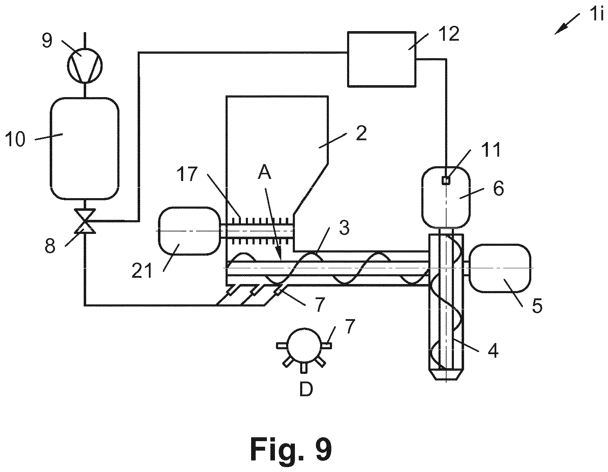

Fig. 7 zeigt ein weiteres Ausführungsbeispiel einer Vorrichtung 1g, bei dem Zerkleinerungsmittel beziehungsweise eine Zerkleinerungsvorrichtung in Form von Messern 17 im Bereich des Vorratsbehälters 2 und somit vor der Übergabeöffnung A angeordnet sind/ist. Die dargestellte Zerkleinerungsvorrichtung 17 ist rein beispielhaft und kann auch in anderer Form ausgebildet sein. Beispielsweise können, wie in der Fig. 5 dargestellt, auch Gegenmesser 18 vorgesehen sein, oder die Zerkleinerungsvorrichtung kann auch Zähne 15 mit optionalen Gegenzähnen 16 (vergleiche ebenfalls Fig. 5) und/oder Schneiden 19 mit optionalen Gegenschneiden 20 (vergleiche Fig. 6) aufweisen. Die Zerkleinerungsvorrichtung 17 kann auch einen gesonderten Antrieb umfassen (siehe auch Fig. 8 und 9), und selbstverständlich kann die Transportschnecke 3 auch in den Vorratsbehälter 2 hineinragen (gilt auch für die in den Figuren 1 bis 6 dargestellten Beispiele).

Anstelle einer einzelnen, der Übergabeöffnung A axial gegenüberliegenden Düse sind in diesem Beispiel mehrere Düsen 7 vorgesehen, die im Bereich der Zerkleinerungsvorrichtung 17 angeordnet sind. Insbesondere sind die Düsen 7 zur Übergabeöffnung A hin geneigt, so wie dies in der Fig. 7 dargestellt ist.

In dem in der Fig. 7 dargestellten Beispiel sind mehrere Düsen 7 umfangsseitig (siehe die Frontansicht D) und axial verteilt angeordnet. Dies ist zwar vorteilhaft, jedoch nicht zwingend. Denkbar ist insbesondere auch, dass die Düsen 7 nur im Bodenbereich der Zerkleinerungsvorrichtung 17 angeordnet sind. Vorstellbar ist auch, dass nur eine einzige Düse 7 im Bereich der Zerkleinerungsvorrichtung 17 vorgesehen ist. In einer vorteilhaften Ausführungsform können die Düsen 7 insbesondere auch entlang einer Schraubenlinie angeordnet sein, und die Düsen 7 können auch eine schraubenlinienförmige Luftströmung erzeugen. Denkbar ist im Speziellen auch, dass die Düsen 7 einzeln oder in Gruppen ansteuerbar sind, um eine gewünschte Strömung zu erzeugen oder diese in gewissen Rahmen zu lenken.

Selbstverständlich sind schräg ausgerichtete Düsen 7, im Bodenbereich des Vorratsbehälters 2 angeordnete Düsen 7, radial und/oder axial verteilte Düsen 7 sowie schraubenlinienförmig angeordnete und/oder ausgerichtete Düsen 7 nicht an die Anwendung einer Zerkleinerungsvorrichtung 17 der Fig. 7 gebunden, sondern können insbesondere auch im Rahmen der in den Figuren 1 bis 6 dargestellten Ausführungsbeispiele angewandt werden.

Fig. 8 zeigt eine Vorrichtung 1h, welche der in der Fig. 7 gezeigten Vorrichtung 1g sehr ähnlich ist. Im Unterschied dazu ist aber eine von der Transportschnecke 3 getrennte und durch einen Motor 21 gesondert angetriebene Zerkleinerungsvorrichtung in Form einer Welle mit Messern 17 vorgesehen. Damit kann der Mahlgrad des der Transportschnecke 3 zugeführten Materials gut beeinflusst werden. Konkret wird die Welle mit den Messern 17 für kleine Teilchengröße schneller gedreht, für große Teilchengröße langsamer.

Fig. 9 zeigt schließlich eine Vorrichtung 1i, bei welcher eine Zerkleinerungsvorrichtung in Form einer Welle mit Messern 17 oberhalb der Transportschnecke 3 und die Düsen 7 im Bereich der Transportschnecke 3 angeordnet sind. Dadurch gelingt die Zuführung des zu verarbeitenden Materials in die Transportschnecke 3 noch besser.

Ganz generell und insbesondere in den Beispielen nach Fig. 1 bis 9 kann die Luft kontinuierlich oder getaktet (also mit Pausen zwischen den Zeiten einer Einblasung) eingeblasen werden. Dementsprechend kann das Ventil 8 als Proportionalventil oder als einfaches Schaltventil ausgebildet sein. Das Proportionalventil ermöglicht einen stetigen Übergang der Ventilöffnung, wohingegen das einfache Schaltventil nur diskrete Schaltstellungen, also "Ein" und "Aus" zulässt. Bei der Taktung kann insbesondere ein variables Puls-/Pausenverhältnis vorgesehen werden, um den Volumenstrom zu variieren. Das Schaltventil wirkt dann ähnlich wie ein Proportionalventil. Denkbar ist insbesondere auch, dass die Luft mit Raumtemperatur eingeblasen wird oder diese zuvor gekühlt oder erwärmt wird.

Der besondere Vorteil eines "echten" Proportionalventils liegt darin, dass die Luftaustrittsgeschwindigkeit und damit der Volumenstrom aus den Düsen 7 beliebig und kontinuierlich einstellbar ist. Demgemäß können Verwirbelungen im Vorratsbehälter 2 und eine damit verbundene Staubentwicklung vergleichsweise gering gehalten werden. Dies ist bei Einsatz eines getakteten Schaltventils nicht in dem Maße der Fall. Zwar wirkt das mit veränderlichem Puls-Pausen-Verhältnis getaktete Schaltventil makroskopisch gesehen als Proportionalventil, in der "Ein"-Stellung tritt die Druckluft aber mit sehr hoher (und für den makroskopisch gewünschten) Luftstrom zu hoher Geschwindigkeit aus den Düsen 7 aus, wodurch es leicht zu starker Verwirbelung im Vorratsbehälter 2 und Staubentwicklung beziehungsweise Staubaustritt aus dem Vorratsbehälter 2 kommen kann. An dieser Stelle wird angemerkt, dass die aus den Düsen 7 austretende Luft in der Regel über den Vorratsbehälter 2 entweicht und nicht über die Transportschnecke 3, die ja zumeist durch den Extruder 4 "dicht" verschlossen ist.

Ein weiterer Vorteil ist, dass der von einem Proportionalventil emittierte konstante Schall als angenehmer empfunden als der vergleichsweise laute und intermittierende Schall des getakteten Ventils. Zudem weist ein Proportionalventil wegen der schonenden Betätigung auch eine vergleichsweise lange Lebensdauer auf.

Darüber hinaus besteht ein Vorteil des Proportionalventils darin, dass es nicht so leicht verstopfen kann wie ein getaktetes Ventil. Ein Proportionalventil ermöglicht grundsätzlich einen konstanten Volumenstrom beliebiger Stärke. Durch den kontinuierlichen Luftaustritt ist ein Verstopfen einer Düse 7 eher unwahrscheinlich. Bei einer Taktung der Druckluft kann es in den damit verbundenen Pausen des Luftaustritts zu einem Rückfließen des im Vorratsbehälter 2 gelagerten Materials in die Düsen 7 und damit zu einem Verstopfen derselben kommen.

Ein weiterer Vorteil des Proportionalventils besteht darin, dass die Austrittsöffnungen der Düsen 7 relativ groß gewählt werden können, ohne dass damit ein sehr hoher und an sich unerwünschter Luftverbrauch einhergeht. Dadurch kann einem Verstopfen der Düsen 7 ebenfalls entgegengewirkt werden. Ohne Einsatz eines Proportionalventils muss eine Düsenöffnung bei gegebenem Systemdruck und einem kleinen gewünschten Volumenstrom zwangsläufig vergleichsweise klein gestaltet werden und neigt dementsprechend leicht zur Verstopfung.

Das zum Proportionalventil Gesagte ist sinngemäß auch auf andere Mittel zur Beeinflussung eines Fluidstroms anwendbar, insbesondere auf proportional stellbare Schieber. Weiterhin ist das Gesagte auch auf die Klappe 13 anwendbar, die ebenfalls stetig einstellbar sein kann oder zwei diskrete Stellungen aufweisen kann. Insbesondere kann eine proportional stellbare Klappe 13 ebenfalls zur Verringerrung von Verwirbelungen im Vorratsbehälter 2, zur Verringerung eine Staubbelastung und zur Verringerung einer Lärmentwicklung beitragen. Generell kann die Zufuhr der Kunststoffteilchen in die Transportschnecke 3 im Wesentlichen auf dem Luftstrom basieren oder überhaupt ausschließlich mit Hilfe des Luftstroms erfolgen. Der Begriff "im Wesentlichen" bedeutet im gegebenen Zusammenhang im Speziellen, dass die Zufuhr der Kunststoffteilchen in die Transportschnecke 3 zu wenigstens 70% auf dem Effekt des Luftstroms basiert. Andere Effekte können zum Beispiel die Schwerkraft und/oder ein in den Vorratsbehälter 2 / das Transportrohr 14 ragender wendelförmiger Abschnitt der Transportschnecke 3 sein (vergleiche Fig. 4 und 9). Basiert die Zufuhr der Kunststoffteilchen in die Transportschnecke 3 nun zu wenigstens 70% auf dem Effekt des Luftstroms, so bedeutet dies, dass die genannte Zufuhr auf weniger als 30% abfällt, wenn der Luftstrom abgeschaltet oder so weit als möglich von der Übergabeöffnung A weggelenkt wird.

Insbesondere kann die Zufuhr der Kunststoffteilchen in die Transportschnecke 3 weiterhin ohne Schieber erfolgen. Das heißt, die vorgestellte Vorrichtung weist in diesem Fall keinen gegenüber der Transportschnecke 3 angeordneten und auf diesen ausgerichteten Schieber auf, so wie dieser auch in den dargestellten Figuren nicht vorhanden ist. Die Verwendung eines an sich bekannten Schiebers ist in den vorgestellten Vorrichtungen 1a..1i aber nicht grundsätzlich ausgeschlossen. Die Kunststoffteilchen können dann auch mit Hilfe des Schiebers in die Transportschnecke 3 befördert werden.

Die Ausführungsbeispiele zeigen mögliche Ausführungsvarianten einer Vorrichtung 1a..1i zur Verarbeitung von thermoplastischem Kunststoff sowie Verfahren zu deren Betrieb, wobei an dieser Stelle bemerkt sei, dass die Erfindung nicht auf die speziell dargestellten Ausführungsvarianten derselben bzw. desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten möglich, die durch Kombinationen einzelner Details der dargestellten und beschriebenen Ausführungsvariante entstehen. Im Speziellen wird darauf hingewiesen, dass die in den Figuren 1 bis 4 gezeigten Ausführungsbeispiele ebenso Zerkleinerungsvorrichtungen aufweisen können. Weiterhin wird angemerkt, dass der Extruder 4 in allen dargestellten Ausführungsformen auch anders ausgerichtet sein kann, im Speziellen koaxial mit der Transportschnecke 3.

Insbesondere wird festgehalten, dass eine Vorrichtung 1a..1i in der Realität auch mehr oder weniger Bestandteile als dargestellt umfassen kann.

Der Ordnung halber sei abschließend darauf hingewiesen, dass zum besseren Verständnis des Aufbaus der Vorrichtung 1a..1i diese beziehungsweise deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1a..1i: Vorrichtung zur Verarbeitung von thermoplastischem Kunststoff
- 2: Vorratsbehälter
- 3: Transportschnecke
- 4: Extruder
- 5: erster Antrieb (für Transportschnecke)

- 6: zweiter Antrieb (für Extruder)
- 7: Luftaustritt (Düse)
- 8: Ventil
- 9: Verdichter/Kompressor
- 10: Drucktank

- 11: Erfassungsmittel für die Belastung des Extruders
- 12: Regelung
- 13: Klappe
- 14: Transportrohr
- 15: Zähne (auf Transportschnecke)

- 16: Gegenzähne
- 17: Messer
- 18: Gegenmesser
- 19: durchgehende Schneiden (auf Transportschnecke)
- 20: Gegenschneiden
- 21: Antrieb für Messerwelle

- A: Übergabeöffnung

## Patentansprüche

1. Vorrichtung (1a..1i) zur Verarbeitung von thermoplastischem Kunststoff, umfassend
- einen Vorratsbehälter (2) zur Aufnahme von stückförmigen Kunststoffteilchen oder eine Transportleitung (14) zum Transport von stückförmigen Kunststoffteilchen,
- eine mit dem Vorratsbehälter (2) / der Transportleitung (14) an einer Übergabeöffnung (A) verbundene Transportschnecke (3),
- einen an die Transportschnecke (3) anschließenden Extruder (4) und
- zumindest einen gegenüber der Übergabeöffnung (A) angeordneten und auf diese gerichteten oder richtbaren Luftauslass (7)
**gekennzeichnet durch**
Mittel (11) zur Erfassung einer Belastung eines Antriebs (6) des Extruders (4), Mittel (8, 13) zur Beeinflussung eines aus dem zumindest einen Luftauslass (7) austretenden Luftstroms sowie eine mit den Erfassungsmitteln (11) und den Beeinflussungsmitteln (8, 13) verbundene Regelung (12).

2. Vorrichtung (1a..1i) nach Anspruch 1, **dadurch gekennzeichnet, dass** die Regelung (12) dazu eingerichtet ist, den Luftstrom zu verstärken und/oder auf die Übergabeöffnung (A) hinzulenken, wenn eine Belastung des Extruders (4) sinkt und umgekehrt.

3. Vorrichtung (1a..1i) nach Anspruch 1 oder 2, **dadurch gekennzeichnet, dass** Mittel zur Beeinflussung eines aus dem zumindest einen Luftauslass (7) austretenden Luftstroms durch ein Ventil (8), einen Schieber oder eine Klappe (13) gebildet ist.

4. Vorrichtung (1a..1i) nach einem der Ansprüche 1 bis 3, **dadurch gekennzeichnet, dass** die Mittel (8, 13) zur Beeinflussung eines aus dem zumindest einen Luftauslass (7) austretenden Luftstroms proportional einstellbar sind.

5. Vorrichtung (1a..1i) nach einem der Ansprüche 1 bis 3, **dadurch gekennzeichnet, dass** die Mittel (8, 13) zur Beeinflussung eines aus dem zumindest einen Luftauslass (7) zwei diskrete Stellungen aufweisen und die Regelung (12) dazu eingerichtet ist, die genannten Mittel (8, 13) mit variablen Puls-Pausen-Verhältnis anzusteuern.

6. Vorrichtung (1a..1i) nach einem der Ansprüche 1 bis 5, **dadurch gekennzeichnet, dass** die Transportschnecke (3) in horizontaler Richtung ausgerichtet ist, oder deren Ausrichtung wenigstens eine horizontale Komponente aufweist.

7. Vorrichtung (1a..1i) nach einem der Ansprüche 1 bis 6, **dadurch gekennzeichnet, dass** ein Querschnitt der Übergabeöffnung (A) in vertikaler Richtung ausgerichtet ist, oder deren Ausrichtung wenigstens eine vertikale Komponente aufweist.

8. Vorrichtung (1a..1i) nach einem der Ansprüche 1 bis 7, **dadurch gekennzeichnet, dass** die Transportschnecke (3) darauf angeordnete Zerkleinerungsmittel (15, 17, 19) aufweist.

9. Vorrichtung (1a..1i) nach Anspruch 8, **dadurch gekennzeichnet, dass** die Zerkleinerungsmittel durch Zähne (15) und/oder Messer (17) und/oder durchgehende Schneiden (19) gebildet sind.

10. Vorrichtung (1a..1i) nach Anspruch 9, **dadurch gekennzeichnet, dass** im Bereich der Transportschnecke (3) mit deren Zähnen (15) / Messern (17) / durchgehenden Schneiden (19) zusammenwirkende, feststehende Gegenzähne (16) / Gegenmesser (18) / Gegenschneiden (20) angeordnet sind.

11. Vorrichtung (1a..1i) nach einem der Ansprüche 8 bis 10, **dadurch gekennzeichnet, dass** die Zerkleinerungsmittel (15, 17, 19) im Bodenbereich des Vorratsbehälters (2) angeordnet sind.

12. Vorrichtung (1a..1i) nach einem der Ansprüche 1 bis 11, **dadurch gekennzeichnet, dass** mehrere Luftauslässe (7) im Bereich der Transportschnecke (3) und/oder der Zerkleinerungsmittel (15, 17, 19) entlang einer Schraubenlinie angeordnet und/oder in Richtung einer Schraubenlinie ausgerichtet sind.

13. Verfahren zur Verarbeitung von thermoplastischem Kunststoff mittels einer Vorrichtung (1a..1i), welche einen Vorratsbehälter (2) zur Aufnahme von stückförmigen Kunststoffteilchen oder eine Transportleitung (14) zum Transport von stückförmigen Kunststoffteilchen, eine mit dem Vorratsbehälter (2) / der Transportleitung (14) an einer Übergabeöffnung (A) verbundene Transportschnecke (3) sowie einen an die Transportschnecke (3) anschließenden Extruder (4) aufweist, bei dem ein Luftstrom zumindest zeitweilig auf die Übergabeöffnung (A) ausgerichtet wird,
**dadurch gekennzeichnet, dass**
- die Stärke und/oder Richtung des Luftstroms in Abhängigkeit einer Belastung des Extruders (4) eingestellt oder geregelt wird.

14. Verfahren nach Anspruch 13, **dadurch gekennzeichnet, dass** der Luftstrom verstärkt und/oder stärker auf die Übergabeöffnung (A) ausgerichtet wird, wenn die Belastung des Extruders (4) sinkt und umgekehrt.

15. Verfahren nach einem der Ansprüche 13 bis 14, **dadurch gekennzeichnet, dass** für die Ermittlung der Belastung des Extruders (4) eine Drehzahl eines Antriebs (6) des Extruders (4), ein von diesem Antrieb (6) aufgenommener Strom oder die Torsion einer Welle im Antrieb (6) gemessen wird.

16. Verfahren nach einem der Ansprüche 13 bis 15, **dadurch gekennzeichnet, dass** für die Einstellung der Stärke des Luftstroms ein Querschnitt in der Zufuhr des Luftstroms und/oder eine Leistungsabgabe eines Kompressors/Verdichters (9) verändert wird.

17. Verfahren nach einem der Ansprüche 13 bis 16 **dadurch gekennzeichnet, dass** für die Einstellung der Richtung des Luftstroms die Richtung einer Austrittsdüse (7) oder die Ausrichtung von Klappen (13) an der Austrittsstelle des Luftstroms verändert wird.

18. Verfahren nach einem der Ansprüche 13 bis 17, **dadurch gekennzeichnet, dass** die Stärke/Richtung des Luftstroms proportional eingestellt wird.

19. Verfahren nach einem der Ansprüche 13 bis 18, **dadurch gekennzeichnet, dass** die Stärke/Richtung des Luftstroms durch ein Umschalten zwischen zwei diskreten Werten in einem variablen Puls-Pausen-Verhältnis quasi-proportional eingestellt wird.

20. Verfahren nach einem der Ansprüche 13 bis 19 **dadurch gekennzeichnet, dass** mehrere Luftauslässe (7) im Bereich der Transportschnecke (3) und/oder der Zerkleinerungsmittel (15, 17, 19) entlang einer Schraubenlinie ausgerichtet werden und damit ein im Wesentlichen schraubenlinienförmiger Luftstrom erzeugt wird.

## Claims

1. A device (1a..1i) for processing thermoplastic plastic, comprising
- a storage container (2) for receiving pieces of plastic particles or a conveying line (14) for conveying the pieces of plastic particles,
- a conveying screw (3) connected to the storage container (2) / the conveying line (14) at a transfer opening (A),
- an extruder (4) following the conveying screw (3), and
- at least one air outlet (7) arranged opposite the transfer opening (A) and directed or able to be directed to this opening (A),
**characterized by**
means (11) for capturing a load on a drive (6) for the extruder (4), means (8, 13) for influencing an air stream emerging from the at least one air outlet (7) and a control unit (12) connected to the capturing means (11) and the influencing means (8, 13).

2. The device (1a..1i) according to claim 1, **characterized in that** the control unit (12) is designed to increase the air stream and/or direct it to the transfer opening (A) if a load on the extruder (4) falls and vice versa.

3. The device (1a..1i) according to claim 1 or 2, **characterized in that** means for influencing an air stream emerging from the at least one air outlet (7) are formed by a valve (8), a slider or a flap (13).

4. The device (1a..1i) according to one of claims 1 to 3, **characterized in that** the means (8, 13) for influencing an air stream emerging from the at least one air outlet (7) can be adjusted on a proportional basis.

5. The device (1a..1i) according to one of claims 1 to 3, **characterized in that** the means (8, 13) for influencing an air stream emerging from the at least one air outlet (7) have two discrete positions and the control unit (12) is designed to control said means (8, 13) with a variable pulse-pause ratio.

6. The device (1a..1i) according to one of claims 1 to 5, **characterized in that** the conveying screw (3) is aligned in the horizontal direction, or its alignment comprises at least one horizontal component.

7. The device (1a..1i) according to one of claims 1 to 6, **characterized in that** a cross-section of the transfer opening (A) is aligned in the vertical direction, or its alignment comprises at least one vertical component.

8. The device (1a..1i) according to one of claims 1 to 7, **characterized in that** the conveying screw (3) comprises crushing means (15, 17, 19) arranged thereon.

9. The device (1a..1i) according to claim 8, **characterized in that** the crushing means are formed by teeth (15) and/or blades (17) and/or continuous cutting edges (19).

10. The device (1a..1i) according to claim 9, **characterized in that** fixed opposing teeth (16) / counterblades (18) / counter cutting edges (20) are arranged in the region of the conveying screw (3) and interact with the teeth (15) / blades (17) / continuous cutting edges (19) of said screw.

11. The device (1a..1i) according to one of claims 8 to 10, **characterized in that** the crushing means (15, 17, 19) are arranged in the bottom region of the storage container (2).

12. The device (1a..1i) according to one of claims 1 to 11, **characterized in that** a plurality of air outlets (7) are arranged along a helix in the region of the conveying screw (3) and/or the crushing means (15, 17, 19) and/or are aligned in the direction of a helix.

13. A method for processing thermoplastic plastic by means of a device (1a..1i), which comprises a storage container (2) for receiving pieces of plastic particles or a conveying line (14) for conveying the pieces of plastic particles, a conveying screw (3) connected to the storage container (2) / the conveying line (14) at a transfer opening (A) as well as an extruder (4) following the conveying screw (3), in which an air stream is directed to the transfer opening (A) at least for some of the time,
**characterized in that**
- the strength and/or the direction of the air stream is adjusted or controlled as a function of a load on the extruder (4).

14. The method according to claim 13, **characterized in that** the air stream is increased and/or directed more towards the transfer opening (A) when the load on the extruder (4) falls and vice versa.

15. The method according to one of claims 13 to 14, **characterized in that** a rotational speed of a drive (6) of the extruder (4), a current consumed by said drive (6) or the torsion in a shaft of the drive (6) is measured in order to determine the load on the extruder (4).

16. The method according to one of claims 13 to 15, **characterized in that** a cross-section of the air stream supply and/or a power output of a compressor (9) is varied to adjust the strength of the air stream.

17. The method according to one of claims 13 to 16, **characterized in that** the direction of a discharge nozzle (7) or the alignment of flaps (13) at the outlet position of the air stream is varied to adjust the direction of the air stream.

18. The method according to one of claims 13 to 17, **characterized in that** the strength/direction of the air stream is adjusted on a proportional basis.

19. The method according to one of claims 13 to 18, **characterized in that** the strength/direction of the air stream is adjusted on a quasi-proportional basis by switching between two discrete values in a variable pulse-pause ratio.

20. The method according to one of claims 13 to 19, **characterized in that** a plurality of air outlets (7) are aligned along a helix in the region of the conveying screw (3) and/or the crushing means (15, 17, 19) and an essentially helically formed air stream is thus generated.

## Revendications

1. Dispositif (1a...1i) pour le traitement d'une matière plastique thermoplastique, comprenant
- un réservoir (2) pour le logement de particules de matière plastique sous la forme de morceaux ou une conduite de transport (14) pour le transport de particules de matière plastique sous la forme de morceaux,
- une vis sans fin de transport (3) reliée avec le réservoir (2) / la conduite de transport (14) au niveau d'une ouverture de transfert (A),
- une extrudeuse (4) raccordée à la vis sans fin de transport (3) et
- au moins une sortie d'air (7) disposée en face de l'ouverture de transfert (A) et orientée ou pouvant être orientée vers celle-ci,
**caractérisé par**
des moyens (11) pour la mesure d'une sollicitation d'un entraînement (6) de l'extrudeuse (4), des moyens (8, 13) pour le contrôle d'un flux d'air sortant de l'au moins une sortie d'air (7) ainsi qu'un dispositif de régulation (12) relié avec des moyens de mesure (11) et les moyens de contrôle (8, 13).

2. Dispositif (1a... 1i) selon la revendication 1, **caractérisé en ce que** le dispositif de régulation (12) est conçu pour amplifier le flux d'air et/ou le diriger vers l'ouverture de transfert (A) lorsqu'une sollicitation de l'extrudeuse (4) diminue et inversement.

3. Dispositif (1a...1i) selon la revendication 1 ou 2, **caractérisé en ce que** le moyen de contrôle d'un flux d'air sortant de l'au moins une sortie d'air (7) est constitué d'une soupape (8), d'un curseur ou d'un clapet (13).

4. Dispositif (1a...1i) selon l'une des revendications 1 à 3, **caractérisé en ce que** les moyens (8, 13) pour le contrôle du flux d'air sortant de l'au moins une sortie d'air (7) sont réglables de manière proportionnelle.

5. Dispositif (1a...1i) selon l'une des revendications 1 à 3, **caractérisé en ce que** les moyens (8, 13) pour le contrôle du flux d'air sortant de l'au moins une sortie d'air (7) présentent deux positions distinctes et le dispositif de régulation (12) est conçu pour contrôler les moyens (8, 13) mentionnés avec un rapport impulsion-pause variable.

6. Dispositif (1a...1i) selon l'une des revendications 1 à 5, **caractérisé en ce que** la vis sans fin de transport (3) est orientée dans la direction horizontale ou son orientation comprend au moins une composante horizontale.

7. Dispositif (1a...1i) selon l'une des revendications 1 à 6, **caractérisé en ce qu'**une section transversale de l'ouverture de transfert (A) est orientée dans la direction verticale ou son orientation comprend au moins une composante verticale.

8. Dispositif (1a...1i) selon l'une des revendications 1 à 7, **caractérisé en ce que** la vis sans fin de transport (3) comprend des moyens de broyage (15, 17, 19) disposés dessus.

9. Dispositif (1a... 1i) selon la revendication 8, **caractérisé en ce que** les moyens de broyage sont constitués de dents (15) et/ou de couteaux (17) et/ou d'arêtes tranchantes continues (19).

10. Dispositif (1a...1i) selon la revendication 9, **caractérisé en ce que**, au niveau de la vis sans fin de transport (3), sont disposées de contre-dents (16) / des contre-couteaux (18) / des contre-arêtes tranchantes (20) interagissant avec les dents (15) / couteaux (17) / arêtes tranchantes continues (19).

11. Dispositif (1a...1i) selon l'une des revendications 8 à 10, **caractérisé en ce que** les moyens de broyage (15, 17, 19) sont disposés au niveau du fond du réservoir (2).

12. Dispositif (1a...1i) selon l'une des revendications 1 à 11, **caractérisé en ce que** plusieurs sorties d'air (7) sont disposées au niveau de la vis sans fin de transport (3) et/ou des moyens de broyage (15, 17, 19) le long d'une hélice et/ou sont orientées dans la direction d'une hélice.

13. Procédé de traitement d'une matière plastique thermoplastique au moyen d'un dispositif (1a... 1i) qui comprend un réservoir (2) pour le logement de particules de matière plastique sous forme de morceaux ou une conduite de transport (14) pour le transport de particules de matière plastique sous forme de morceaux, une vis sans fin de transport (3) reliée avec le réservoir (2) / la conduite de transport (14) au niveau d'une ouverture de transfert (A) ainsi qu'une extrudeuse (4) raccordée à la vis sans fin de transport (3), dans lequel un flux d'air est orienté, au moins en deux parties, vers l'ouverture de transfert (A),
**caractérisé en ce que**
- l'intensité et/ou la direction du flux d'air est ajusté ou régulé en fonction d'une sollicitation de l'extrudeuse (4).

14. Procédé selon la revendication 13, **caractérisé en ce que** le flux d'air est orienté de manière amplifiée et/ou plus fortement vers l'ouverture de transfert (A) lorsque la sollicitation de l'extrudeuse (4) diminue et inversement.

15. Procédé selon l'une des revendications 13 à 14, **caractérisé en ce que**, pour la détermination de la sollicitation de l'extrudeuse (4), une vitesse de rotation d'un entraînement (6) de l'extrudeuse (4), un flux pris en charge par cet entraînement (6) ou la torsion d'un arbre dans l'entraînement (6) est mesuré.

16. Procédé selon l'une des revendications 13 à 15, **caractérisé en ce que**, pour le réglage de l'intensité du flux d'air, une section transversale dans l'arrivée du flux d'air et/ou une sortie de puissance d'un compresseur/compacteur (9) est modifiée.

17. Procédé selon l'une des revendications 13 à 16, **caractérisé en ce que**, pour le réglage de la direction du flux d'air, la direction d'une buse de sortie (7) ou l'orientation de clapets (13) au niveau de la sortie du flux d'air est modifiée.

18. Procédé selon l'une des revendications 13 à 17, **caractérisé en ce que** l'intensité/direction du flux d'air est réglée de manière proportionnelle.

19. Procédé selon l'une des revendications 13 à 18, **caractérisé en ce que** l'intensité/direction du flux d'air est réglée de manière quasi-proportionnelle grâce à la commutation entre deux valeurs distinctes dans un rapport impulsion-pause variable.

20. Procédé selon l'une des revendications 13 à 19, **caractérisé en ce que** plusieurs sorties d'air (7) sont orientées, au niveau de la vis sans fin de transport (3) et/ou des moyens de broyage (15, 17, 19), le long d'une hélice et un flux d'air globalement hélicoïdal est ainsi généré.
